# EUROPÄISCHE PATENTSCHRIFT

(11) **EP 2 895 740 B1**
(45) Veröffentlichungstag und Bekanntmachung des Hinweises auf die Patenterteilung: **16.11.2016**
(21) Anmeldenummer: 13773600.5
(22) Anmeldetag: 16.09.2013
(51) Int. Cl.: F03D 5/00

(54) **GEFESSELTES FLÜGELSYSTEM ZUR WINDENERGIENUTZUNG**
TETHERED WING KITE FOR WIND ENERGY COLLECTION
CERF-VOLANT POUR SYSTÈME D'EXTRACTION D'ÉNERGIE DU VENT

(30) Priorität: 17.09.2012 EP 12006504
(43) Veröffentlichungstag der Anmeldung: 22.07.2015
(73) Patentinhaber: EnerKite GmbH, 14532 Kleinmachnow (DE)
(72) Erfinder: BORMANN, Alexander, 10115 Berlin (DE); SKUTNIK, Stefan, 13156 Berlin (DE); GEBHARDT, Christian, 10437 Berlin (DE); RANNEBERG, Maximilian, 10247 Berlin (DE)
(74) Vertreter: Benz, Jürgen
(86) Internationale Anmeldenummer: PCT/EP2013/002782
(87) Internationale Veröffentlichungsnummer: WO 2014/040747

(56) Entgegenhaltungen:
- WO-A1-2007/122650
- FR-A1- 2 789 129
- FR-A1- 2 880 868
- US-A- 4 198 019

## Beschreibung

### Gebiet der Erfindung:

Die Erfindung betrifft eines gefesseltes Flügelsystem und seine Herstellung für eine Windkraftanlage z.B. zur Wandlung von Strömungsenergie in elektrische Energie, welches für den sicheren und effizienten Betrieb optimierte aerodynamische und mechanische Eigenschaften aufweist und zudem nur durch eines oder mehrere Zugelemente mit einer Wandlereinheit verbunden ist und aus einer optimierten Kombination von starren, biegesteifen Konstruktionselementen, wie beispielsweise Balken und Schalenstrukturen, mit flexiblen, biegeweichen Flächengebilden, wie beispielsweise Membranen, Folien, Laminate, besteht. Die erfindungsgemäßen Flügel weisen sehr vorteilhafte physikalische Eigenschaften, wie Flächenbelastung, Flächengewicht und Leistungsertrag. Ein bestimmter Flügel dieses Typs ist aus US 4,198,019 bekannt.

### Grundlagen der Erfindung, Stand der Technik und Nachteile

Flugwindkraftanlagen sind nicht an hohe bodenfeste Strukturen, wie z.B. Türme und Masten, gebunden, die Strömungsenergie des Windes wird mittels Fesselfluggeräten in mechanische und elektrische Energie gewandelt. Die Vorteile solcher Systeme liegen vor allem darin, dass das hohe Energieangebot und die hohe Gleichmäßigkeit von Wind in großen Höhen z.B. oberhalb 100 m mit geringerem Materialaufwand und zu geringen Kosten möglich ist. Windenergieanlagen, die einen Rotor an einer bodenfesten Struktur aufweisen, werden mit heutigem Stand sowohl aus technischen, als auch aus wirtschaftlichen Gründen kaum größer als 200 m Gesamthöhe ausgeführt. Die Massen und Kosten der Fundament- und Turmstruktur bilden einen erheblichen Teil des Aufwandes und entfallen bei Flugwindkraftanlagen fast vollständig. Damit ist es bei Flugwindkraftanlagen gegenüber mast- bzw. turmgebundenen Windkraftanlagen zu geringeren Relativkosten möglich, die Anlage auf geringere Wind- Nenngeschwindigkeiten bzw. höhere Nennlastverfügbarkeit auszulegen. Dies führt zu einer Vergleichsmäßigung des Windstromangebots und reduziert bei Nutzung von Binnenstandorten die Aufwendungen im Bereich der Speichertechnik und der Verteilernetze.

Es existieren mehrere verschiedene Konzepte solcher Flugwindkraftanlagen. Bekannt sind solche, die die Windenergie bereits im Fluggerät in elektrische Energie wandeln und durch ein stromführendes Seil zum Boden leiten, z.B. aus US 20100295303. Des Weiteren gibt es Konzepte, bei denen eine bewegliche Bodenstation vom Fluggerät über eine Bahnkurve oder eine Strecke am Boden gezogen wird, z.B. Europäische Patentschrift EP 2 075 461 B1, sowie Konzepte, bei denen ein am Boden befindlicher Rotor mit vertikaler Achse durch ein ziehendes Fluggerät mittels einem Seil fester Länge in Drehung versetzt wird.

In rotorbetriebenen Windenergieanlagen liegen die Flächenbelastungen bei typischerweise 100 - 150 kg/m², welche über Biegemomente in die Nabe abgetragen werden müssen. Dimensionierend sind hier neben den mittleren statischen Lasten, insbesondere die wechselnden Biegemomente an der Flügelwurzel infolge des Windgradienten und des Eigengewichts sowie Lastspitzen aus dem Turmvorstau und böigen Winden. Hier kommen Flügel in Faserverbundbauweise mit leistungsbezogenen Massen von 5 - 15 kg/kW bei Kleinwindanlagen und 10 - 25 kg/kW bei Megawattanlagen zum Einsatz. Dies geht mit einem Flächengewicht von 20 - 60 kg/m² für kleine bzw. 50 - 150 kg/m² für große Anlagen einher, so dass dem Größenwachstum dieser Bauweise natürliche Grenzen gesetzt sind. Alternative sind Konstruktionen mit Fesselflügeln oder Schirmkonstruktionen. Fesselflügel sind typischerweise auf Flächenbelastungen zwischen 30 - 60 kg/m² ausgelegt und weisen einschließlich Rumpf und Leitflächen ein Flächengewicht von ca. 100 kg/m² auf. Die insbesondere im Sportbereich eingesetzten Schirm-Konstruktionen sind typischerweise auf Flächenbelastungen zwischen 3 - 10 kg/m² ausgelegt und weisen Flächengewichte von ca. 0,1 - 0,2 kg/m² auf.

Grob unterteilt werden gefesselte Flügel in textiler Bauweise, die ihre Formbeständigkeit auf folgende Weise erhalten:
(i) Differenzdruckbeaufschlagung resultierend aus der Anströmung (Staudruck):
   Staudruckflügel kommen bei Fallschirmen und Gleitschirmen und bei Sportkites aber auch bei Zugsegelsystem für Schiffe (Skysails) und in der Entwicklung von Flugwindkraftlagen zum Einsatz. Bei dieser Bauweise wird die strömungsbedingte Druckdifferenz zwischen dem Staupunkt und entlang des umströmten Profils ausgenutzt. An den Außenflächen des am Staupunkt geöffneten Profils wirken geringere Druckkräfte als im Innern des Flügels. Der Vorteil dieser Bauweise ist der mögliche Verzicht auf jegliche starre Strukturelemente und somit ein minimales Gewicht. Die Flügel bzw. Schirme entfalten sich selbständig bei sich aufbauender Anströmung was insbesondere bei Gleitschirmen z.B. nach einem möglichen Kollabieren ein Sicherheitsgewinn darstellt. Die Nachteile dieses Systems sind: (a) leichtes Kollabieren des Flügels bei fehlender Anströmung auch beim Start, da keine biegesteifen Elemente vorhanden sind; (b) Notwendigkeit einer feinverzweigten Anleinung zur Lastabtragung, was zu einem hohen Luftwiderstand und damit zu einem aerodynamisch ineffizienten Flügel führt, und (c) eingeschränkter oder fehlender effizienter Rückholbetrieb. Aufgrund des wandernden Staudruckpunktes, der speziellen Anleinung und schwankender Anströmung in turbulenter Luft kann ein Staudruckflügel nicht mit sehr geringen oder negativen Anstellwinkeln und dementsprechend geringen Auftriebs- und Widerstandbeiwerten geflogen werden. So wird bei der Rückholung im Yo-Yo Betrieb nahezu so viel Energie verbraucht, wie bei der Ausholphase. Bei dauerhaften Anwendungen, auch solchen, die nicht den Yo-Yo Betrieb einschließen, rückt zudem das Haltbarkeitsproblem der Nahtverbindungen und Gewebe in den Mittelpunkt.
(ii) innendruckbeaufschlagte, geschlossene Membranteile (sog. Tubekites):
   Im Wassersport haben sich Tubekites (ii) verbreitet, da diese auch nach einer Wasserlandung einfach gestartet werden können. Die Tubes erlauben zudem eine Lastkonzentration auf die druckbeaufschlagten Elemente. Nachteile der Tubekites sind beispielsweise: Konstante Druckbeaufschlagung von Strukturelementen sind in der technischen Umsetzung aufwendig, relativ schwer und anfällig für Defekte. Bei möglichen Leckagen verliert die Konstruktion ihre Steifigkeit. Aktive Druckbeaufschlagung zum Ausgleich von Leckagen bringt in unerwünschter Weise zusätzliches Gewicht, Energiebedarf und Kosten mit sich. Die bekannten segelähnlichen Konstruktionen neigen unter bestimmten Anströmbedingungen auch zum Flattern was die Sicherheit und Haltbarkeit beeinträchtigt. Der Rückholbetrieb ist bei dieser Bauweise zwar besser realisierbar aber dennoch auch hier nur eingeschränkt möglich.
(iii) starre Struktur basierend auf meist Faserverbundwerkstoffen: Starre Strukturen gewährleisten die besten aerodynamischen Eigenschaften wobei im Flugzeugbau und in der klassischen Windenergienutzung meist die beste Gleitzahl, sprich das beste Verhältnis von Auftrieb zu Widerstand maßgebend ist. Die Nachteile von bekannten Flügelsystemen mit starrer Struktur sind, wie folgt: Die Verwendung von z.B. einem Segelflugzeug ähnlichen Fluggeräten bringt hohe Flächengewichte mit sich. Die Flügel sind dann so schwer, das sie bei Windgeschwindigkeiten im Betriebsbereich der Anlage nicht ohne zusätzliche Hilfsmittel gestartet werden können. Die untere Einschaltgrenze liegt mit diesen Flügeln vergleichsweise hoch, im Schwachwindbereich kann daher weniger Strom erzeugt werden. Die Kosten für Flügel dieser Bauweise sind aufgrund der verwendeten Materialien und des Fertigungsaufwandes vergleichsweise hoch. Ebenfalls bekannt ist eine Kombination der starren und flexiblen Bauweise in Form bei Hängegleitern und Deltaflügeln. Hier werden bessere Gleitzahlen mit einer zerlegbaren und somit transportierbaren Konstruktion jedoch nur Flächenbelastungen von 7 - 10 kg/m² und Flügelgrößen unter 20 m² realisiert.

### Aufgabe der Erfindung:

Technische Systeme der Windenergienutzung sollen über den gesamten Windbereich von typischerweise 0 - 25 m/s sicher einsetzbar, aerodynamisch effizient und dabei ressourcenschonend sein und so ein maximales Nutzen/Aufwandsverhältnis erreichen. Für ein mit Zugelementen gefesseltes Flügelsystem ergibt sich die Anforderung nach leichten und haltbaren Flächenelementen zur effizienten Auftriebserzeugung, Stabilisierung und Steuerung sowie nach einem effizienten Verbindungssystem zu einem oder mehreren Fesselleinen. Für die Gewährleistung eines sicheren Fluges und der Steuerbarkeit ist die Form- und Maßhaltigkeit des Flügels erforderlich, da sich sonst die gewünschten aerodynamischen und flugmechanischen Eigenschaften während des Betriebs ungünstig ändern. Entscheidend für die Kraft- und Leistungsregelung über die verschiedenen Betriebsmodi und in einem großen Windbereich ist die Beeinflussung des Auftriebs des Flügels.

Der Ertrag einer im Yo-Yo Betrieb arbeitenden Flugwindkraftanlage ist maßgeblich davon abhängig, wie viel Kraft das Fluggerät in der Ausfahrphase auf das oder die Zugelemente (Seile) übertragen kann, ehe es sich unzulässig verformt oder bricht. Bezogen auf die projizierte Fläche des gefesselten Fluggerätes wird von einer Flächenbelastung, Einheit N/m², gesprochen. Damit die Abmessungen des gefesselten Fluggeräts nicht auf eine ungeeignetes Maß anwachsen, sind pro Fläche hohen Kräfte zu erzeugen und auf das Zugelement zu übertragen. Dazu muss das Fluggerät über einen weiten Betriebsbereich hohen aerodynamischen Auftrieb (cA = 1 - 2) bei geringem Widerstand inkl. Seil von (cW = 0,1 - 0,2), sowie ein möglichst geringes Flächengewicht aufweisen, da die Gewichtskräfte den Seilzugkräften entgegen wirken. Die Eignungsgrenzen hinsichtlich Gewicht und Fläche des Fluggerätes liegen bei geringen Windgeschwindigkeiten in der Startbarkeit des Fluggerätes am Boden und in der erforderlichen Erhaltungsenergie bzw. der Schleppfähigkeit für Flugzustände bei Flauten in der Luft. Zum anderen hängt der Ertrag einer im YoYo-Betrieb arbeitenden Flugwindkraftanlage maßgeblich davon ab, dass das Fluggerät in der Einholphase mit minimaler Energie und in kurzer Zeit bzw. bei hoher Seilgeschwindigkeit und geringer Seilkraft zurückgeholt werden kann. Das Fluggerät muss daher auch in der Lage sein Abtrieb zu erzeugen und negative Anstellwinkel zuzulassen und dabei noch über Flug- und Formstabilität bzw. sichere Steuerbarkeit verfügen. Für die Auslegung von Flugwindkraftanlagen sind geringere Auslegungswindgeschwindigkeiten von 6 - 10 als bei bisherigen Windkraftanlagen 11-15 m/s zielführend. Damit die Flügel dann nicht zu große Ausmaße annehmen, sollen pro Quadratmeter Flügelfläche etwa 2 - 8 kW nutzbare Energie gewandelt werden.

Aufgabe der Erfindung war es somit, ein Flügelsystem zur Windenergienutzung zur Verfügung zu stellen, welches, insbesondere im YoYo-Betrieb, die oben genannten gewünschten vorteilhaften Eigenschaften jedoch ohne die im Stand der Technik bekannten und oben ebenfalls beschriebenen Nachteile aufweisen soll.

### Zusammenfassung der Erfindung:

Die vorliegende Erfindung betrifft ein Flügelsystem zur Windenergienutzung, welches vorzugsweise im sogenannten YoYo-Betrieb arbeitet. Dieser besteht im Wesentlichen aus zwei Phasen. Phase 1 ist dadurch gekennzeichnet, dass das Fluggerät Seile mit großer Kraft aus einer Generatorwinde am Boden auszieht, welche diese mechanische Energie in nutzbare Form wandelt. Phase 2 ist dadurch gekennzeichnet, dass das Fluggerät so betrieben wird, dass die Seilkräfte geringer als in Phase 1 werden und das Fluggerät mit höherer Geschwindigkeit als in Phase 1 unter geringerem Energieeinsatz wieder eingeholt wird. In diesem YoYo-Zyklus entsteht eine positive Gesamtenergiebilanz an der Bodenstation, wobei die nutzbare Energie ggf. nach einer Vergleichsmäßigung durch einen Pufferspeicher, abgegeben wird.

Die beschriebenen Anforderungen an Flügel von Drachenwindkraftanlagen lassen sich durch die erfindungsgemäße Bauweise erfüllen, ohne das die beschriebenen Nachteile der bisherigen Flügelbauweisen in Kauf genommen werden müssen. Wesentliches Kennzeichnen der hier beschriebenen Bauweise ist der funktional abgestimmte und kombinierte Einsatz von flexiblen Bauteilen (z.B. Textilien und Folienlaminate) und steifen Bauteilen z.B. Biegeträger oder Schalenkonstruktionen. Der Ansatz geht zurück auf die genaue Analyse der funktionalen Anforderungen, der auftretenden Belastungen, der Lebensdauer, Kosten und des Fertigungsaufwandes.

Das hier beschriebene erfindungsgemäße Flügelsystem besteht im Wesentlichen aus mindestens einer stabilen aerodynamischen Auftriebsfläche aus ein oder mehreren Membranfeldern (Folien, Laminate, Gewebe), Profilelementen, die eine optimierte aerodynamische Form vorgeben und die Lasten aus den Membranfeldern konzentrieren, ein oder mehreren Biegetorsionsträgern, welche die flächigen Kräfte und Momente über die Profilelemente auf eine Hauptanleinungsebene reduzieren, ein oder mehreren Versteifungselementen, die eine Vorspannung der Membranelemente und falten- bzw. flatterfeien Einsatz ermöglichen und einer vorzugsweise mehrteiligen Hauptanleinung (5) (6) bzw. Flügel-Waage (12), welche die Lastabtragung zu einem oder mehreren Hauptseilen hin realisiert und dabei eine freie Rotation des Flügels nicht nur um die Hochachse, sondern zumindest auch um die Nickachse und ggf. auch um die Rollachse gewährleistet. Aufgrund der gewählten Materialien, Funktionselemente und Konstruktion weist das erfindungsgemäße Flügelsystem eine Flächenbelastung von größer als 30 kg/m², vorzugsweise 50-150 kg/m², und zugleich ein Flächengewicht von kleiner als 20 kg/m², vorzugsweise 2 - 5 kg/m² auf, und liefert einen Leistungsertrag von bis 2 - 20 kW, vorzugsweise 3 - 5 kW pro Quadratmeter Flügelfläche.

Anders als bekannte Fluggeräte besteht gemäß der Erfindung das Problem der Realisierung zweier effizienter weit voneinander weg gelegener Betriebspunkte für 1. die Energieerzeugung in der Arbeitsphase und 2. für die schnelle und effiziente Rückholphase. Bekannte Lösungen verwenden hier mitfliegende Steuersysteme (Gondel (Skysails, TU Delft) oder aktive Klappen wie beim Segelflugzeug (Ampyx)).

Die erfindungsgemäße Konstruktion ist jedoch dadurch gekennzeichnet, dass sie kontrollierte und effiziente Flugbewegungen einer einzigen passiven aerodynamischen Fläche in zwei von einander getrennten Betriebspunkten ermöglicht, wobei hier die Ansteuerung über Halte- und Steuerseile allein vom Boden aus erfolgt. So und nur so ist es hier erstmals möglich auf aktive Ansteuerung im Flügel zu verzichten.

Die Erfindung umfasst weiterhin die Möglichkeit über aktiv aktuierte und ggf. vom Flügel aus gesteuerte Klappen die aerodynamischen Eigenschaften zu verändern.

Die Erfindung umfasst weiterhin die Möglichkeit, die erfindungsgemäße Flügelkonstruktion aus einzelnen separaten Profilsegmenten aufzubauen, die sich in modularer Bauweise koppeln lassen, wobei die notwendigen Kopplungspunkte vorzugsweise im Bereich der Lastenleitungsebenen d.h. der Waagepunkte angebracht sind.

Überraschenderweise wurde gefunden, dass durch die gewählte Bauweise, die verwendeten unterschiedlichen festen und elastischen Materialen, welche erfindungsgemäß sich formschlüssig und kraftschlüssig miteinander verbinden lassen, sowie der Einsatz einer zentralen Waagleine (4), welche herkömmliche kommerzielle Systeme nicht aufweisen, hervorragende Gleit- und Flugeigenschaften (aerodynamische Widerstand von cW < 0.20, vorzugsweise < 0.15; aerodynamischer Auftrieb cA > 1.0, vorzugsweise > 1.5) mit optimaler Energiegewinnung (> 2 vorzugsweise > 5 kW / m² Flügelfläche) durch Hoch-und Runterfahren des Flügels, insbesondere im YoYo- Betrieb durch die Bodenstation, erreicht werden können.

Die erfindungsgemäße Flügelkonstruktion zeigt ferner eine Flächenbelastung vorzugsweise zwischen 50-150 kg/m² Flügelfläche und weist zugleich ein Flächengewicht von vorzugsweise 2 - 5 kg/m² Flügelfläche auf. Hierdurch kann im Betrieb einen Leistungsertrag von 2 - 30 kW/m² Flügelfläche, vorzugsweise 5 - 10 kW/m² Flügelfläche erzielt werden.

Gegenstand der Erfindung ist somit eine flugfähige durch Wind angetriebene passive aerodynamische Flügelkonstruktion, welche befähigt ist, durch Wind erzeugte Strömungsenergie in elektrische Energie umzuwandeln, im Wesentlichen umfassend mindestens einen Flügel aus festen Gerüstelementen mit flexiblen, elastischen Segelflächenelementen sowie seilgeführte Halte-, Zug-, und Ausfahrvorrichtungen (5, 6, 12) sowie Steuervorrichtungen (9), die mit einer Bodenstation verbunden sind, von welcher besagte Flügelkonstruktion betrieben und gesteuert wird, wobei (i) der Flügel einen. profilierten harten aber elastischen Trägerholm (2) in Spannweitenrichtung des Flügels aufweist und der Flügelnase als Basis dient, an dem über Gelenke oder andere Verbindungselemente (11) harte, nicht-flexible Profilelemente (8), welche die Form des Flügels bestimmen, angebracht sind, wobei diese Profilelemente durch ein biegeweiches Membran-, Laminat-, oder Folienmaterial als Obersegel (25) und ein biegeweiches Membran-, Laminat-, oder Folienmaterial als Untersegel (26) miteinander unter Spannung verbunden sind und einzelne Profilsegmente bilden, und (ii) der Flügel zur Lastabtragung im Bereich der größten Lasteinwirkung mindestens eine flügelmittige zentrale Waagleine (4) oder ein flügelmittiges, starres, mit einem Gelenk oder Lager versehenen Anbindungselement (18, 19) besitzt, so dass die freie Rotation des Flügels, inklusive Nick- und Gierbewegungen möglich ist, wobei vorzugsweise die besagten festen starren Teile formschlüssig mit den dehnelastischen, biegeweichen Teilen verbunden sind. Vorzugsweise weist die erfindungsgemäße Flügelkonstruktion eine nicht-verzweigte oder eine einfach oder mehrfach verzweigte Flügel-Waage (12, 13,14) auf, die vorzugsweise ein- oder mehrteilige Zugseile (5, 6) und / oder ein oder mehrere starre vorzugsweise mit Gelenken versehene Anbindungselementen (18, 19) besitzt, welche im Bereich des Profilholms (2) oder des vorderen Teils der Profilelemente (8) angeordnet ist, um dort für optimale Lastabführung zu sorgen, ohne die Flugeigenschaften signifikant zu verändern.

Gegenstand der Erfindung ist ferner die Verwendung derartiger Flügelkonstruktionen zur Gewinnung von elektrischer Energie aus Windkraft mittels unterschiedlicher Anlagen, herkömmliche (rotorgetriebene) Windkraftanlagen eingeschlossen.

Gegenstand der Erfindung ist auch eine entsprechende Windkraftanlage oder FlugwindKraftanlage, welche mit mindestens einer erfindungsgemäßen Flügelkonstruktion ausgestattet sind und mindestens einen Teil der Energie aus der erfindungsgemäßen Flügelkonstruktion beziehen.

### Genauere Beschreibung der Erfindung:

In einer bevorzugten Ausführungsform umfasst die erfindungsgemäße Flügelkonstruktion eine mehrteilige aus Zugseilen bestehende, einfache oder verzweigte oder mehrfach verzweigte Flügel-Waage (5, 6, 7, 12, 13). Alternativ weist die erfindungsgemäße Flügelkonstruktion Führungsvorrichtungen (15, 16, 17) im Bereich des Profilholmes (2) auf, die es ermöglichen, dass die zentrale Waagleine (4) und / oder das Anbindungselement (18, 19) und / oder die Flügel-Waage (5, 6, 7, 12, 13) nach vorne und hinten bewegt werden kann, so dass die besagten Elemente eine laterale oder eine transversale Position zum Flügel oder auch Positionen dazwischen einnehmen können.

Der Profilholm (2) besitzt erfindungsgemäß eine D-Form (geschlossen) oder eine offene U-Form, und besteht aus einem harten aber biegbaren Material, vorzugsweise aus Kunststoff. In der Regel sind die Anbindungsvorrichtungen (3, 4, 5, 6, 7, 18, 14) im Bereich der größten Lasteinwirkung angebracht, also vorzugsweise im Bereich des Profilholmes (2). Dabei können besagte Elemente im unteren Bereich des Holmprofilkörpers außen, oder auch an der Innenseite des oberen Bereich des Profilholms. In einer speziellen Ausführungsform weist die erfindungsgemäße Flügelkonstruktion Führungsvorrichtungen (15, 16, 17) auf, die an der äußeren Fläche der Unterseite des Profilholmes (2) oder alternativ auf der inneren Fläche der Oberseite des Profilholmes (2) angebracht sind.

Vorzugsweise besitzt die erfindungsgemäße Flügelkonstruktion eine Flügel-Waage, wobei das Hauptseil (5) mit den äußeren Waagleinen (6) der Flügel-Waage ggf. über Umlenkrollen (14) in Verbindung steht.

In einer anderen Ausführungsform kann die Flügelkonstruktion ein starres Anbindungselement (18) aufweisen, dass vorzugsweise über ein in alle Richtungen bewegliches Gelenk mit dem Flügel in dessen Längsmitte verbunden ist. In diesem Fall ist das Hauptseil (5) direkt mit dem starren Anbindungselement (18) verbunden.

In einer weiteren Ausführungsform der Erfindung sind Ober- und Untersegel (25, 26) in Spannweitenrichtung über eine biegeweiche, strömungselastische, aus Folie oder Membran bestehende und gebogene Vorderkante (1a) miteinander verbunden.

Weiterhin können bei der erfindungsgemäßen Flügelkonstruktion die Segelelemente und / oder die steifen Trägerelemente faserverstärkt sein oder eine strukturverstärkende Matrix aufweisen.

In einer bevorzugten Ausführungsform weist die erfindungsgemäße Flügelkonstruktion Profilsegmente auf, welche Staudrucköffnungen (24) im Bereich der Vorderkante aufweisen. Beispielsweise kann jedes oder jedes zweite oder dritte Profilsegment eine solche Staudrucköffnung aufweisen, wodurch die Flugeigenschaften und die Steuerbarkeit des Flügels verbessert werden kann.

Eine weitere Verbesserung kann durch bewegliche steuerbare Vorflügelelemente (20) (21) im Bereich der Vorderkante der erfindungsgemäßen Flügelkonstruktion erreicht werden, wobei die Vorflügelelemente durch Winkelveränderung von der Bodenstation ansteuerbar sind.

Die Steuerung der erfindungsgemäßen Flügelkonstruktion kann erfindungsgemäß und in vorteilhafter Weise im Bereich der hinteren Kante des Flügels durch dehnelastsiche Elemente ohne Verwendung von Stellklappen oder andersartiger Stellvorrichtungen erfolgen.

Die erfindungsgemäße Flügelkonstruktion kann auch modulartig aus einzelnen Profilsegmenten zusammengesetzt sein, welche einzeln transportierbar sind, und am Betriebsort miteinander gekoppelt werden können, wobei die Kopplung im Bereich der Lastenleitungsebenen oder Waagepunkte erfolgt.

Die erfindungsgemäße Flügelkonstruktion ist vorzugsweise zur Gewinnung von elektrischer Energie in Flugwindkraftanlagen mit stationärer oder mobiler Bodenstation oder auch anstelle des Rotors oder zusätzlich zum Rotor von herkömmlichen Windkraftanlagen, vorzugsweise im YoYo-Betrieb, geeignet. Insbesondere eignet sich die erfindungsgemäße Flügelkonstruktion bei Vorhandensein von zwei getrennten auseinander liegenden Betriebspunkten, welche die Energieerzeugung in der Arbeitsphase und die schnelle und effiziente Rückholphase des Fluggerätes umfassen, wobei die Ansteuerung über Halte- und Steuerseile ausschließlich vom Boden aus erfolgen kann.

Die Verbindung von flexiblen, biegeweichen Membranelementen zu steifen Profilelementen und Trägern kann lösbar durch Formschluss (Keder, Schlaufen), Kraftschluss (Klemmverbindung) und chemisch (Klebverbindung) erreicht werden. Neuartig ist dabei die Kombination von faserverstärkten Verbundstrukturen mit Folienlaminat derart, dass ein stetiger Kraftfluss durch die direkte Einbettung der Verstärkungsfasern der jeweiligen Elemente in einer gemeinsamen z.B. thermoplastischen Matrix erfolgt. Die Verstärkungsfaser können so belastungsgerecht von der starren Struktur direkt in die Segelbereiche verlegt werden.

Zur Realisierung optimaler aerodynamischer Eigenschaften kann der Biege- Torsionsträger bereits einen aerodynamisch geformten Querschnitt z.B. im Bereich Vorderkante aufweisen und durch Hochauftriebshilfen z.B. in Form von Vorflügeln ergänzt werden. Diese Hochauftriebshilfen erfüllen den erfindungsgemäßen Zweck besonders dann, wenn sie variabel an die Flugzustände angepasst werden können bzw. sich passiv und selbsttätig z.B. für den Fall der Energieerzeugung oder Start und Landung ausbilden und im Fall des Gleitflugs bei Rückholung zurück bilden. Erreicht wird dies durch einen Abgestimmten Federmechanismus, der im Gleichgewicht mit den unterschiedlichen Druckverteilungen der verschiedenen Flugzustände am Flügel steht oder zumindest durch Änderung in der Druckverteilung oder Flügellage und Position ausgelöst wird. Ergänzt werden kann diese Hochauftriebshilfe durch die Aufprägung von sogenannten Tuberkeln an der Nasenkante, welche ein längeres Anliegen der Strömung bei großen Anstellwinkeln und damit für die Flugwindkraftanlagen einen wichtigen Gewinn an Flugstabilität und Auftrieb, bzw. Energieertrag bringen. Diese Tuberkel können als sinusförmige Modulation der Vorderkanten Geometrie aufgefasst werden, wobei die Wellenlänge und Amplitude üblicherweise nicht kleiner als die Profildicke ausgewählt wird welche selbst aber unverändert bleibt.

Des Weiteren umfasst diese Erfindung auch die optimierte Anleinung der Flügelstruktur durch eine verzweigte Waage die die Lastabtragung auch Anstellwinkeländerung bis hin in den negativen Bereich und ggf. Rollwinkeländerung des Flügels einerseits und eine Gewichtsreduzierung der Biegetorsionsträger andererseits realisiert. Konkret erfolgt dies für den Nickwinkel durch eine gelenkige Anbindung mit Drehpunkt Nahe der Profilsehne welche in der Regel innerhalb das Biegetorsionsträgers zwischen der Vorder- und Hinterkante des Flügels verläuft und durch die Verwendung von geteilten Vorflügeln.

Die hier beschriebene Erfindung schließt die Möglichkeit der Implementierung von flexiblen und adaptive Stellelemente zur passiven und aktiven Steuerung in Kombination mit bereichsweise elastischen Profilelementen mit ein. Dazu werden die biegeelastischen Flächenelemente bereichsweise insbesondere im weniger druckbeaufschlagten Bereich der hinteren Kante durch dehnelastische Elemente ersetzt, welche einer innerhalb oder außerhalb aktuierten Profilverformung mit abgestimmten Rückstellkräften folgen. Auf diese Weise werden dem Flügelsystem Steuermomente aufgeprägt, ohne, dass es eines aufwendigen Klappenmechanismus bedarf.

Die Rippenprofile (8) mit identischer Form für die einfache Fertigung können beispielsweise über einen variablen Adapter am Holm befestigt werden, um Pfeilung und Verwindung gerecht zu werden.

Im folgenden erden die oben und unten verwendeten Bezugsgrößen beschrieben:
- 1: flexibles, biegeweiches Membran- oder Folien-Flächenelement
- 2: steifer, elastischer Biege- Torsionsträger (Holm) in Profilform
- 3: Anbindung der Zentralen Waagleine an den Holm
- 4: Zentrale Waagleine zum Flügel
- 5: Hauptseil
- 6: Äußere Waagleinen (optional, umlaufend)
- 7: Umlenkelement (optional zur Gewährleistung des Rollfreiheitsgrades)
- 8: Profilelement
- 9: Anleitung für die Steuerung
- 10: Federelement ggf. als Schiene
- 11: Holm - Rippenverbindung, oder -gelenk
- 12: Flügel-Waage
- 13: Anleinungspunkte für Flügel-Waage
- 14: Umlenkrolle für Flügel-Waage
- 15: Führungselement
- 16: Einrastpunkt
- 17: Geführtes Anbindungselement
- 18: Starres Anbindungselement
- 19: Gelenk / Lager
- 20: Vorflügel eingefahren
- 21: Vorflügel ausgefahren
- 22: Betätigungselement eingefahren
- 23: Betätigungselement ausgefahren.
- 24: Eintrittsöffnungen
- 25: Flächenelement Obersegel (luftdicht)
- 26: Flächenelement Untersegel (luftdicht)
- 27: Profilelement als Flügelabschluss (luftdicht)

### Definitionen:

Biegesteife Konstruktionselemente sind Balken, Rohre und Schalenkonstruktionen, welche einer Verformung quer zur Ihrer längsten Ausdehnung einen großen Widerstand entgegensetzten. Üblicherweise treten hier bei Verformungen hohe elastische Rückstellkräfte und Momente auf.

Biegeweiche Flächengebilde sind Membranen, Folien und verstärkte Laminate die im Wesentlichen nur einem ebenen Spannungszustand infolge Zug und Schubdeformation ausgesetzt sind und eine Verformung quer zur Fläche nur einen sehr geringen Widerstand entgegensetzen.

Die projizierte Fläche ist der Flächeninhalt der Außenkontur des Fluggerätes, in Richtung seiner kleinsten Ausdehnung projiziert (Dimension: m²).

Maximale Flächenlast ist die Summe der am Fluggerät maximal erlaubten Seilkräfte, projiziert in Richtung der kleinsten Ausdehnung des Fluggerätes und bezogen auf die projizierte Fläche (Dimension: N/m²).

Maximal erlaubt im Sinne der Erfindung sind die Kräfte, die die Gebrauchstauglichkeit des Fluggerätes erhalten, ohne, dass es zu Versagen von Bauteilen oder zu unzulässigen Verformungen kommt, die den sicheren und effizienten Betrieb beeinträchtigen.

Flächengewicht ist die Masse des Fluggerätes bezogen auf seine projizierte Fläche (Dimension: N/m²).

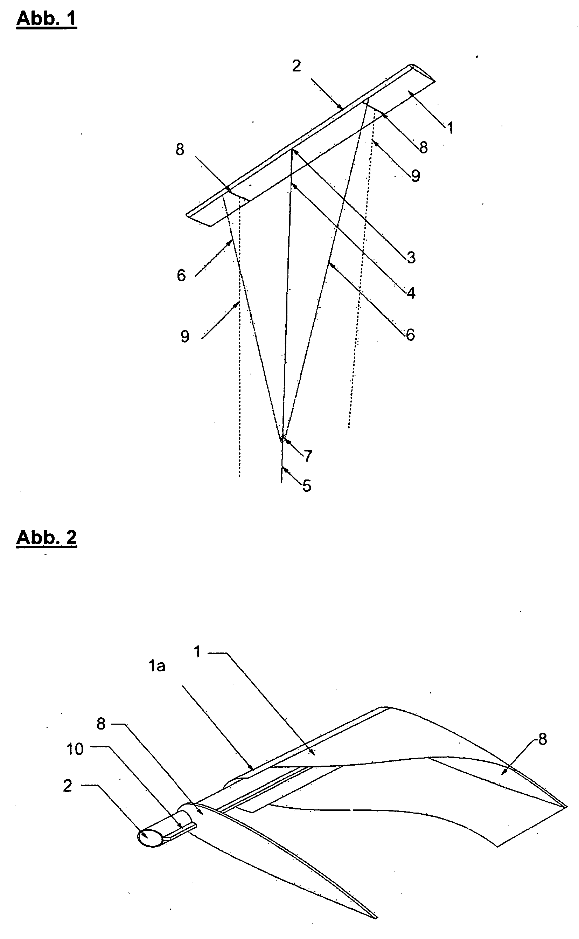

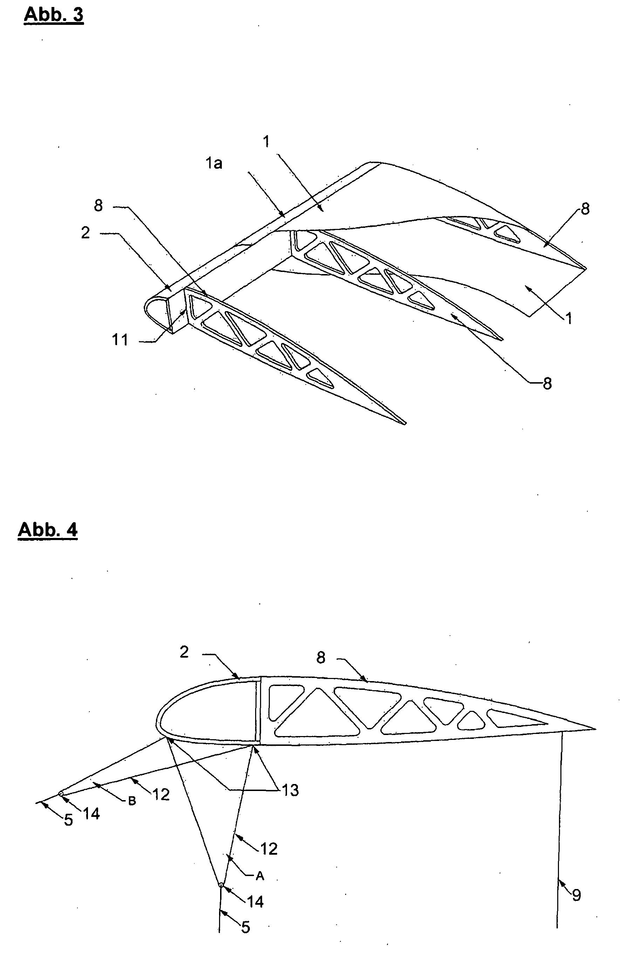

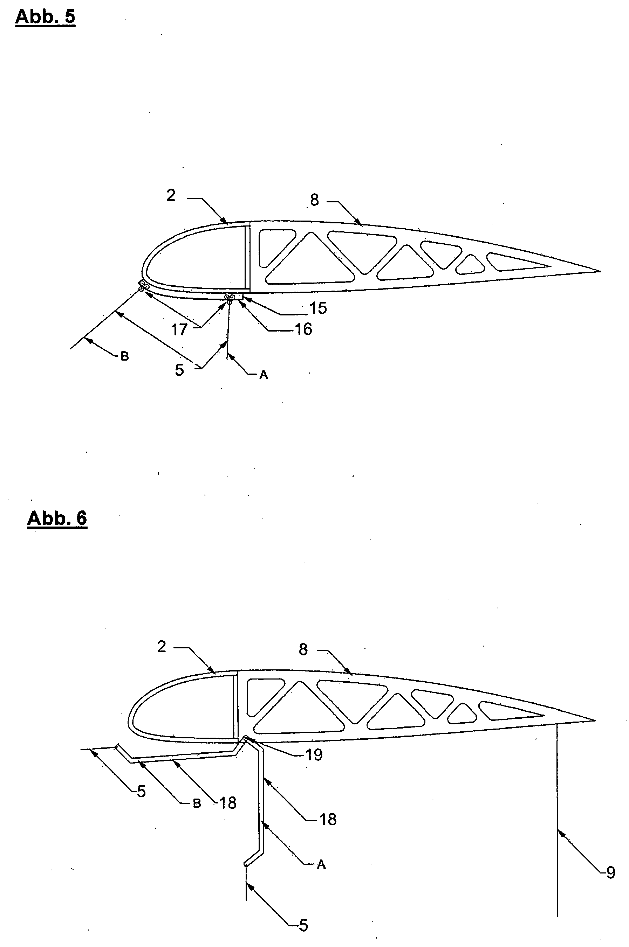

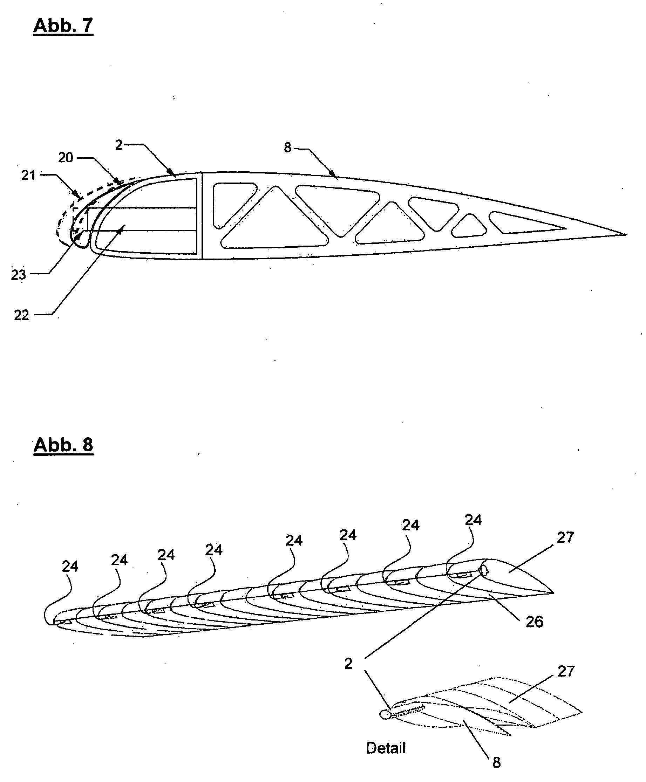

Das erfindungsgemäße Flügelsystem kann, wie bereits erwähnt und genannt, in verschiedenen Ausführungsformen vorliegen. Einige hiervon werden in den Abbildungen 1 - 8 dargestellt und in den nachfolgenden Beispielen erläutert.
Beispiel 1 (Abb. 1): beschreibt die Ausführung eines Flügelsystems mit Anleinung, umfassend ein flexibles, biegeweiches Flächenelement, einen steifen, elastischen BiegeTorsionsträger (Holm), eine Anbindung der zentralen Waagleine an den Holm und zum Flügel-Hauptseil sowie äußere durchlaufende Waagleinen mit optionalem Umlenkelement zur Gewährleistung des Rollfreiheitsgrades, sowie einem optionalen Profilelement mit Anbindung der Haupt- und Steuerleinen.
Beispiel 2 (Abb.2): beschreibt eine weitere Ausführungsform mit an den runden oder ovalen Holm formschlüssig angebundenen, teilweise oder komplett starren Rippenelementen sowie vorgespannten Membranelementen, wobei der Holm in Spannweitenrichtung zur Aufnahme von Druck (durch die Vorspannung der Segel ), sowie von Torsion und Biegung (aus den aerodynamischen Kräften, die über die Profilelemente eingeleitet werden) befähigt ist. Der Profilholm ist an seiner Vorderkante mit einer beweglichen biegeweichen Membranfolie (1a) eingefasst, welche form- und kraftschlüssig mit der flexiblen biegeweichen Flächenmembran (1) verbunden ist, welche das Obersegel (25) und Untersegel (26) der Flügelkonstruktion bildet.
Beispiel 3 (Abb.3): zeigt eine weitere Ausführungsform mit einem Holm in D-Profil und mehreren festen und starren und verwindungssteifen Profilelementen (8), die aus Gewichtsgründen eine durchbrochene Struktur aufweisen können, mit fest oder gelenkig angebundenen Rippenelementen (8) sowie vorgespannten Membranelementen (1). Der D-förmige Holm ist mit einer beweglichen biegeweichen Membranfolie (1a) eingefasst, welche form- und kraftschlüssig mit der flexiblen biegeweichen Flächenmembran (1) verbunden ist, welche das Obersegel (25) und Untersegel (26) der Flügelkonstruktion bildet.
   Die biegeweichen Membranelemente (1) (1a) können mit Profilelementen (8) verbunden sein. Sie werden entsprechend den auftretenden Belastungen aus aerodynamischen Kräften und aus der Vorspannung in der Materialbeschaffenheit und Fügetechnik bzw. mit lokalen Aufdopplungen angepasst.
Beispiel 4 (Abb. 4): zeigt einen Querschnitt des erfindungsgemäßen Flügels der Abb. 3. Auf der Unterseite des D-förmigen Holms, ist eine laterale und transversale Flügel-Waage abgebildet, welche für die Lastabführung zur Bodenstation verantwortlich ist. Der Flügel besitz an der hinteren Flügelkante eine Anleinung (9).
Beispiel 5 (Abb.5): beschreibt einen Flügel gemäß Abb. 4, bei dem die ggf. verzweigte Flügel-Waage jedoch ohne verzweigte Seil bezogene Flügel-Waage von einem von vorne nach hinten geführten Anbindungselement (17) gebildet wird, an dem direkt das Hauptseil (5) angebracht ist, wobei das Anbindungselement im unteren Bereich des D-förmigen Profilholmes (2), als in der Profilsehne, befestigt ist. Flügel-Waage, bzw. Hauptseil können sich entlang dem Anbindungselement vor und zurückbewegen.
Beispiel 6 (Abb.6): beschreibt eine externe Flügelwaagenanbindung innerhalb der erfindungsgemäßen Flügelkonstruktion. Alternativ zur Ausführung nach Abb. 5 wird eine starre Anbindung (18) mit Gelenk (19) vorgeschlagen, welche insbesondere dadurch gekennzeichnet ist, das der Drehpunkt in der Profilsehne - d.h. in der gedachten Verbindungslinie zwischen Vorderkante und Hinterkante des Flügels liegt. Dabei wird zunächst vorgeschlagen, dass Gelenk (19) in die Profilelemente (8) zu integrieren Alternativ kann die Anbindung auch im vorderen Bereich des Profilholms (2) befestigt sein. Ferner wird eine externe diskontinuierliche, geführte und verschiebbare vorgeschlagen, welche vorzugsweise fest in die Profilelemente (8) integriert ist. Alternativ kann das Gelenk oder die externe Verschiebbarkeit des Anbindungspunktes mittels Gleitflächen am Holm realisiert werden.
   Die beschriebene Flügel-Waage-Anbindung in der Profilsehne hat den Vorteil, dass sie einen minimierten, bzw. auf die Steuerkräfte gut abgestimmten Ausschlag der Flügels hin zu minimierten Anstellwinkeln im Rückholbetrieb bewirkt. Dieser wird dadurch besonders effizient, dass der Rückholwiderstand minimiert wird. Die Hochauftriebselemente an der Vorderkante sind dafür zu unterbrechen, damit sie nicht mit dem um ca. 90° variierenden Seil zu kollidieren.
Beispiel 7 (Abb.7): zeigt einen Querschnitt eines erfindungsgemäßen Flügels gemäß Abb. 4 (gezeigt ohne Flügel-Waage) welcher einen mittels eines vor-und zurückbeweglichen Schubelementes (22) aus- und einfahrbaren Vorflügel (21) (20) aufweist.
Beispiel 8 (Abb. 8): beschreibt einen erfindungsgemäßen Flügel. Er besteht aus dem Holm, der formschlüssig mit teilweise oder komplett starren Rippenelementen sowie Membranelementen verbunden ist. Durch die vorhandenen Staudrucköffnungen (24) in einzelnen durch mindestens zwei Profilelementen (8) gebildeten Profilsegmenten ist eine Differenzdruckbeaufschlagung, z.B. durch Staudruck realisierbar.
Beispiel 9 (ohne Abb.) beschreibt eine weitere Ausführungsform derart, dass die biegeweichen Flächengebilde als geschlossene Halbhülle in Art eines Überzugs über die Holmrippenstruktur gezogen und gegeneinander an der mittigen Verbindungsebene verspannt werden. Für die Anbindungselemente der Waage und der Vorflügel enthält diese Ausführungen entsprechende Aussparungen, welche insbesondere nach der Montage einen Wasser und Witterungsdichten Abschluss zwischen der biegetorsionssteifen Struktur und den biegeelastischen schubsteifen Membranelementen herstellt.
Beispiel 10 (ohne Abb.) beschreibt ein mögliche Ausführungsform des Holmes mit innenliegendem Blitzschutz, derart, dass ein leichtes Aluminiumrohr als interne Kabelführung verwendet wird, welches einen Blitzkanal hin zu den Anbindungspunkten gibt, wobei die Ausführung der Seilanbindung derart erfolgt, dass die Mischung aus nichtleitenden und leitenden Materialien die Realisierung eines ionisierten Blitzkanals ermöglicht. Dabei realisieren die jeweiligen Anbindungspunkte und Anleinungen einen möglichen Pfad für einen Blitz in Richtung Boden derart, dass auch bei Zerstörung eines Leiterpfades, sprich eines Lastpfades der Anbindung, das Flügelsystem noch sicher gelandet werden kann.

## Patentansprüche

1. Flugfähige durch Wind angetriebene passive aerodynamische Flügelkonstruktion, welche befähigt ist, durch Wind erzeugte Strömungsenergie in elektrische Energie umzuwandeln, im Wesentlichen umfassend mindestens einen Flügel aus festen Gerüstelementen mit flexiblen, elastischen Segelflächenelementen sowie seilgeführte Halte-, Zug-, und Ausfahrvorrichtungen (5, 6, 12) sowie Steuervorrichtungen (9), die mit einer Bodenstation verbunden sind, von welcher besagte Flügelkonstruktion betrieben und gesteuert wird, **dadurch gekennzeichnet, dass**
(i) der Flügel einen profilierten harten aber elastischen Trägerholm (2) in Spannweitenrichtung des Flügels aufweist und der Flügelnase als Basis dient, an dem über Gelenke oder Verbindungselemente (11) harte, nicht-flexible Profilelemente (8), welche die Form des Flügels bestimmen, angebracht sind, wobei diese Profilelemente (8) durch ein biegeweiches Membran-, Laminat-, oder Folienmaterial als Obersegel (25) und ein biegeweiches Membran-, Laminat-, oder Folienmaterial als Untersegel (26) miteinander unter Spannung verbunden sind und einzelne Profilsegmente bilden, und
(ii) der Flügel zur Lastabtragung im Bereich der größten Lasteinwirkung mindestens eine flügelmittige zentrale Waagleine (4) besitzt, so dass die freie Rotation des Flügels in Form von Nick- und Gierbewegungen möglich ist.

2. Flügelkonstruktion nach Anspruch 1, **dadurch gekennzeichnet dass** sie eine mehrteilige aus Zugseilen (5, 6) und / oder aus ein oder mehreren starren mit Gelenken versehenen Anbindungselementen (18, 19) bestehende Flügel-Waage (12) besitzt, welche im Bereich des Profilholms (2) oder des vorderen Teils der Profilelemente (8) angeordnet ist.

3. Flügelkonstruktion nach Anspruch 1 oder 2, **dadurch gekennzeichnet, dass** sie Führungsvorrichtungen (15, 16, 17) im Bereich des Profilholmes (2) aufweist, die es ermöglichen, dass die zentrale Waagleine (4) und / oder die Anbindungselemente (18, 19) und / oder die Zugseile (5, 6) nach vorne und hinten bewegt werden können, so dass die besagten Elemente eine laterale oder eine transversale Position zum Flügel oder Positionen dazwischen einnehmen können.

4. Flügelkonstruktion nach Anspruch 3, **dadurch gekennzeichnet, dass** die Führungsvorrichtungen (15, 16, 17) auf der äußeren Fläche der Unterseite oder auf der inneren Fläche der Oberseite des Profilholmes (2) angebracht sind.

5. Flügelkonstruktion nach einem der Ansprüche 1 -4, **dadurch gekennzeichnet, dass** das Hauptseil (5) direkt mit dem starren Anbindungselement (18) verbunden ist oder mit den äußeren Waagleinen (6) der Flügel-Waage (12) über Umlenkrollen (14) in Verbindung steht.

6. Flügelkonstruktion nach einem der Ansprüche 1 -5, **dadurch gekennzeichnet, dass** Ober- und Untersegel (25, 26) in Spannweitenrichtung über eine biegeweiche, strömungselastische, aus Folie oder Membran bestehende und gebogene Vorderkante (1a) verbunden sind.

7. Flügelkonstruktion nach einem der Ansprüche 1 -6, **dadurch gekennzeichnet, dass** die Segelelemente und / oder die steifen Trägerelemente faserverstärkt sind oder eine strukturverstärkende Matrix aufweisen.

8. Flügelkonstruktion nach einem der Ansprüche 1 -7, **dadurch gekennzeichnet, dass** jedes oder jedes zweite oder dritte Profilsegment eine Staudrucköffnung (24) im Bereich der Vorderkante aufweist.

9. Flügelkonstruktion nach einem der Ansprüche 1 -8, **dadurch gekennzeichnet, dass** im Bereich der Vorderkante zusätzlich mindestens ein starres oder bewegliches Vorflügelelement (20) (21) angebracht ist, welches ggf. durch Winkelveränderung von der Bodenstation aus steuerbar ist

10. Flügelkonstruktion nach einem der Ansprüche 1 -9, **dadurch gekennzeichnet, dass** sie durch Steuer- und Antriebszugmittel (9) mit der Bodenstation verbunden und somit steuerbar ist, wobei die Steuerung des Flügels im Bereich der hinteren Kante des Flügels durch dehnelastsiche Elemente ohne Verwendung von Stellklappen oder andersartiger Stellvorrichtungen erfolgt

11. Flügelkonstruktion nach einem der Ansprüche 1 -10, **dadurch gekennzeichnet, dass** sie aus zwei oder mehreren separaten Profilsegmenten besteht, die einzeln transportierbar sind, und am Betriebsort miteinander gekoppelt werden können, wobei die Kopplung im Bereich der Lastenleitungsebenen oder Waagepunkte erfolgt.

12. Verwendung einer Flügelkonstruktion gemäß einem der Ansprüche 1 -11 zur Gewinnung von elektrischer Energie
(i) in Flugwindkraftanlagen mit stationärer oder mobiler Bodenstation;
(ii) anstelle des Rotors oder zusätzlich zum Rotor von Windkraftanlagen, oder
(iii) für den zusätzlichen Antrieb von Schiffen.

13. Verwendung nach Anspruch 12, **dadurch gekennzeichnet, dass** die die Flügelkonstruktion im YoYo-Betrieb betrieben wird.

14. Verwendung Anspruch 12 oder 13 zur kontrollierten und effizienten Flugbewegung besagter Flügelkonstruktion mit von getrennten auseinander liegenden Betriebspunkten, umfassend die Energieerzeugung in der Arbeitsphase und die schnelle und effiziente Rückholphase des Fluggerätes, wobei die Ansteuerung über Halte- und Steuerseile ausschließlich vom Boden aus erfolgt.

15. Flugwindkraftanlage, umfassend mindestens eine Flügelkonstruktion gemäß einem der Ansprüche 1 -11 sowie eine stationäre oder mobile Bodenstation.

## Claims

1. Flight-capable, wind-driven, passive aerodynamic wing construction which is capable of converting flow energy generated by wind into electrical energy, essentially comprising at least one wing comprising fixed frame elements with flexible, elastic sail area elements and cable-guided tethering, traction and extension devices (5, 6, 12) and control devices (9), which are connected to a ground station which operates and controls said wing construction, **characterised in that**
(i) the wing has a profiled hard, but elastic support spar (2) in the spanwise direction of the wing and the wing leading edge serves as base on which hard, inflexible profile elements (8), which determine the shape of the wing, are mounted via joints or connecting elements (11), where these profile elements (8) are connected to one another under stress by a flexible membrane, laminate or film material as upper sail (25) and a flexible membrane, laminate or film material as lower sail (26) and form individual profile segments, and
(ii) the wing has, for load distribution in the region of the greatest loading, at least one central bridle line (4) in the centre of the wing, so that free rotation of the wing in the form of pitch and yaw movements is possible.

2. Wing construction according to Claim 1, **characterised in that** it has a multipart wing bridle (12), which consists of traction cables (5, 6) and/or of one or more rigid connecting elements (18, 19) provided with joints and is arranged in the region of the profile spar (2) or the front part of the profile elements (8).

3. Wing construction according to Claim 1 or 2, **characterised in that** it has guide devices (15, 16, 17) in the region of the profile spar (2) which enable the central bridle line (4) and/or the connecting elements (18, 19) and/or the traction cables (5, 6) to be moved forwards and backwards, so that the said elements are able to adopt a lateral or transverse position to the wing or positions in between.

4. Wing construction according to Claim 3, **characterised in that** the guide devices (15, 16, 17) are mounted on the outer surface of the underside or on the inner surface of the top side of the profile spar (2).

5. Wing construction according to one of Claims 1 - 4, **characterised in that** the main cable (5) is connected directly to the rigid connecting element (18) or is connected to the outer bridle lines (6) of the wing bridle (12) via deflection rolls (14).

6. Wing construction according to one of Claims 1 - 5, **characterised in that** the upper and lower sails (25, 26) are connected in the spanwise direction via a flexible, flow-elastic, curved front edge (1a) consisting of film or membrane.

7. Wing construction according to one of Claims 1 - 6, **characterised in that** the sail elements and/or the rigid support elements are fibre-reinforced or have a structure-reinforcing matrix.

8. Wing construction according to one of Claims 1 - 7, **characterised in that** each or every second or third profile segment has a dynamic pressure opening (24) in the region of the front edge.

9. Wing construction according to one of Claims 1 - 8, **characterised in that** at least one rigid or movable slat element (20) (21), which is optionally controllable by changing the angle from the ground station, is additionally mounted in the region of the front edge.

10. Wing construction according to one of Claims 1 - 9, **characterised in that** it is connected to the ground station by control and drive traction means (9) and is thus controllable, where the control of the wing takes place in the region of the rear edge of the wing by elastic elements without the use of control flaps or other types of control device.

11. Wing construction according to one of Claims 1 - 10, **characterised in that** it consists of two or more separate profile segments, which are individually transportable and can be coupled to one another at the site of operation, where the coupling takes place in the region of the load line planes or bridle points.

12. Use of a wing construction according to one of Claims 1 - 11 for obtaining electrical energy
(i) in airborne wind turbines with stationary or mobile ground station;
(ii) instead of the rotor or in addition to the rotor of wind turbines, or
(iii) for additional driving of ships.

13. Use according to Claim 12, **characterised in that** the wing construction is operated in yo-yo mode.

14. Use according to Claim 12 or 13 for the controlled and efficient flight movement of said wing construction with separate operating points lying apart from one another, comprising the generation of energy in the working phase and the rapid and efficient recovery phase of the kite, where the control takes place exclusively from the ground via tethering and control cables.

15. Airborne wind turbine, comprising at least one wing construction according to one of Claims 1 - 11 and a stationary or mobile ground station.

## Revendications

1. Construction d'aile aérodynamique passive entraînée par le vent et pouvant voler qui peut convertir une énergie de flux générée par le vent selon de l'énergie électrique, comprenant de façon essentielle au moins une aile constituée par des éléments de châssis fixes avec des éléments de surface de voile élastiques et flexibles et par des dispositifs d'attache, de traction et d'extension guidés par câble (5, 6, 12), et des dispositifs de commande (9), lesquels dispositifs de commande sont connectés à une station au sol qui fait fonctionner et commande ladite construction d'aile, **caractérisée en ce que**
(i) l'aile comporte un mât de support en dur prôfilé mais élastique (2) dans la direction du sens de l'envergure de l'aile et le bord d'attaque d'aile joue le rôle de base sur laquelle des éléments de profil en dur et non flexibles (8), lesquels éléments de profil déterminent la forme de l'aile, sont montés via des joints ou des éléments de connexion (11), dans laquelle ces éléments de profil (8) sont connectés les uns aux autres sous contrainte par une membrane, un stratifié ou un matériau de film flexible en tant que voile supérieure (25) et par une membrane, un stratifié ou un matériau de film flexible en tant que voile inférieure (26) et forment des segments de profil individuels, et
(ii) l'aile comporte, pour la distribution de la charge dans la région du chargement le plus important, au moins une ligne de bride centrale (4) au centre de l'aile, de telle sorte qu'une rotation libre de l'aile sous la forme de mouvements de tangage et de lacet soit possible.

2. Construction d'aile selon la revendication 1, **caractérisée en ce qu'**elle comporte une bride d'aile en plusieurs parties (12), laquelle bride d'aile est constituée par des câbles de traction (5, 6) et/ou par un ou plusieurs élément(s) de connexion rigide(s) (18, 19) muni(s) de joints et est agencée dans la région du mât de profil (2) ou au niveau de la partie avant des éléments de profil (8).

3. Construction d'aile selon la revendication 1 ou 2, **caractérisée en ce qu'**elle comporte des dispositifs de guidage (15, 16, 17) dans la région du mât de profil (2), lesquels dispositifs de guidage permettent que la ligne de bride centrale (4) et/ou les éléments de connexion (18, 19) et/ou les câbles de traction (5, 6) soient déplacés en avant et en arrière, de telle sorte que lesdits éléments puissent adopter une position latérale ou transversale par rapport à l'aile ou des positions entre.

4. Construction d'aile selon la revendication 3, **caractérisée en ce que** les dispositifs de guidage (15, 16, 17) sont montés sur la surface externe du côté inférieur ou sur la surface interne du côté supérieur du mât de profil (2).

5. Construction d'aile selon l'une des revendications 1 - 4, **caractérisée en ce que** le câble principal (5) est connecté directement à l'élément de connexion rigide (18) ou est connecté aux lignes de bride externes (6) de la bride d'aile (12) via des poulies de renvoi (14).

6. Construction d'aile selon l'une des revendications 1 - 5, **caractérisée en ce que** les voiles supérieure et inférieure (25, 26) sont connectée dans la direction du sens de l'envergure via un bord avant incurvé flexible et élastique au flux (1a) constitué par un film ou une membrane.

7. Construction d'aile selon l'une des revendications 1 - 6, **caractérisée en ce que** lesdits éléments de voile et/ou les éléments de support rigides sont renforcés par fibres ou comportent une matrice de renforcement de structure.

8. Construction d'aile selon l'une des revendications 1 - 7, **caractérisée en ce que** chacun des second et troisième segments de profil comporte une ouverture de pression dynamique (24) dans la région du bord avant.

9. Construction d'aile selon l'une des revendications 1 - 8, **caractérisée en ce qu'**au moins un élément de latte rigide ou mobile (20) (21), qui peut en option être commandé en modifiant l'angle par rapport à la station au sol, est de façon additionnelle monté dans la région du bord avant.

10. Construction d'aile selon l'une des revendications 1 - 9, **caractérisée en ce qu'**elle est connectée à la station au sol par des moyens de traction de commande et d'entraînement (9) et peut ainsi être commandée, dans laquelle la commande de l'aile est réalisée dans la région du bord arrière de l'aile par des éléments élastiques sans l'utilisation de volets de commande ou d'autres types de dispositif de commande.

11. Construction d'aile selon l'une des revendications 1 - 10, **caractérisée en ce qu'**elle est constituée par deux segments de profil séparés ou plus, lesquels segments peuvent être transportés individuellement et peuvent être couplés l'un à l'autre ou les uns aux autres au niveau du site de fonctionnement, dans laquelle le couplage est réalisé dans la région des plans de ligne de charge ou des points de bride.

12. Utilisation d'une construction d'aile selon l'une des revendications 1 - 11 pour obtenir de l'énergie électrique :
(i) dans des éoliennes aéroportées avec station au sol stationnaire ou mobile ;
(ii) en lieu et place du rotor ou en plus du rotor d'éoliennes, ou
(iii) pour une propulsion supplémentaire de bateaux.

13. Utilisation selon la revendication 12, **caractérisée en ce que** la construction d'aile est actionnée en mode yoyo.

14. Utilisation selon la revendication 12 ou 13 pour le déplacement en vol commandé et efficient de ladite construction d'aile avec des points de fonctionnement séparés implantés de manière à ce qu'ils soient espacés les uns des autres, comprenant la génération d'énergie dans la phase opérationnelle et la phase de récupération rapide et efficiente du cerf-volant, dans laquelle la commande est réalisée exclusivement depuis le sol via des câbles d'attache et de commande.

15. Eolienne aéroportée, comprenant au moins une construction d'aile selon l'une des revendications 1 - 11 et une station au sol stationnaire ou mobile.
